# EUROPEAN PATENT APPLICATION

(11) **EP 4 819 276 A1**
(43) Date of publication of application: **07.10.2026**
(21) Application number: 24897833.0
(22) Date of filing: 13.09.2024
(51) Int. Cl.: H01M 10/0562, H01M 10/052, C01B 25/14

(54) **SOLID ELECTROLYTE, METHOD FOR PREPARING SAME, AND LITHIUM SECONDARY BATTERY COMPRISING SAME**

(30) Priority: 29.11.2023 KR 20230168788
(71) Applicant: POSCO Holdings Inc., Pohang-si, Gyeongsangbuk-do 37859 (KR)
(72) Inventor: KWON, Ohmin, Pohang-si, Gyeongsangbuk-do 37859 (KR); NAM, Sang Cheol, Pohang-si, Gyeongsangbuk-do 37859 (KR); OH, Gwangseok, Pohang-si, Gyeongsangbuk-do 37859 (KR)
(74) Representative: Zacco Sweden AB
(86) International application number: PCT/KR2024/014066
(87) International publication number: WO 2025/116234

(57) **Abstract**

The present invention relates to a solid electrolyte, a method for preparing the same, and a lithium secondary battery comprising the same. Specifically, the present invention relates to a sulfide-based solid electrolyte comprising one or more of Li₂SO₄ and P₂O₅, a method for preparing the same, and a lithium secondary battery comprising the same.

## Description

### [TECHNICAL FIELD]

The present invention relates to a solid electrolyte, a method for preparing the same, and a lithium secondary battery comprising the same. Specifically, the present invention relates to a sulfide-based solid electrolyte comprising one or more of Li₂SO₄ and P₂O₅, a method for preparing the same, and a lithium secondary battery comprising the same.

### [BACKGROUND ART]

Recently, as demand for IT mobile devices and small electric power-driven devices such as electric bicycles and small electric vehicles has rapidly increased, interest in high-capacity batteries has increased. In addition, improvement in safety and increase in energy density of high-capacity batteries have emerged as major issues. Accordingly, as interest in all-solid-state batteries has increased in order to improve the safety of existing secondary batteries and increase energy density, research related to all-solid-state batteries has been actively conducted. An all-solid-state battery refers to a battery in which a liquid electrolyte conventionally used in a lithium secondary battery is replaced with a solid. Since a flammable solvent is not used in the battery, ignition or explosion caused by a reaction such as a decomposition reaction of a conventional electrolyte solution does not occur at all, and thus safety of the battery can be improved. In addition, since lithium metal or a lithium alloy can be used as a negative electrode material, energy density with respect to the mass and volume of the battery can be improved. In the above-described all-solid-state battery, an inorganic solid electrolyte is generally used, and in particular, solid electrolytes having a composition such as Li₆PS₅Cl having an argyrodite structure have been variously studied. However, a sulfide-based solid electrolyte has a problem in that it is difficult to handle in a general atmosphere due to a side reaction with moisture, and improving this has emerged as an important task.

### [SUMMARY OF THE INVENTION]

### [Technical Problem]

A technical problem to be solved by the present invention is to provide a solid electrolyte having improved moisture stability and initial capacity.

Another technical problem to be solved by the present invention is to provide a method for preparing a solid electrolyte having the above-described advantages.

Another technical problem to be solved by the present invention is to provide a lithium secondary battery comprising a solid electrolyte having the above-described advantages.

### [Technical Solution]

A solid electrolyte according to an embodiment of the present invention comprises one or more of Li₂SO₄ and P₂O₅, and may be represented by the following Chemical Formula 1.

[Chemical Formula 1] Li₇₋₅ₐ₋ₓ₊ₐₓP_{1-a+2b}S₆₋₅ₐ₋ₓ₊ₐₓO_{4a+5b}Clₓ₋ₐₓ

wherein 1≤x≤2, 0<a≤0.2, and 0≤b≤0.1.

A method for preparing a solid electrolyte according to another embodiment may include preparing a lithium raw material, a sulfur raw material, a halogen raw material, and P₂O₅ as raw materials; mixing the raw materials; pressure-molding the mixture to form a pellet; and heat-treating the pellet, and may include forming a solid electrolyte represented by the following Chemical Formula 1.

[Chemical Formula 1] Li₇₋₅ₐ₋ₓ₊ₐₓP_{1-a+2b}S₆₋₅ₐ₋ₓ₊ₐₓO_{4a+5b}Clₓ₋ₐₓ

wherein 1≤x≤2, 0<a≤0.2, and 0≤b≤0.1.

A lithium secondary battery according to another embodiment of the present invention comprises: a positive electrode comprising a positive electrode active material; a negative electrode comprising a negative electrode active material; and a solid electrolyte positioned between the positive electrode and the negative electrode, wherein the solid electrolyte comprises one or more of Li₂SO₄ and P₂O₅, and may be represented by the following Chemical Formula 1.

[Chemical Formula 1] Li₇₋₅ₐ₋ₓ₊ₐₓP_{1-a+2b}S₆₋₅ₐ₋ₓ₊ₐₓO_{4a+5b}Clₓ₋ₐₓ

wherein 1≤x≤2, 0<a≤0.2, and 0≤b≤0.1.

### [Advantageous Effects]

The solid electrolyte according to an embodiment of the present invention comprises one or more of Li₂SO₄ and P₂O₅, thereby providing a solid electrolyte having improved moisture stability and initial capacity as compared with a conventional sulfide-based solid electrolyte.

The method for preparing a solid electrolyte according to another embodiment of the present invention can provide a method for preparing a solid electrolyte having the above-described advantages.

The lithium secondary battery according to another embodiment of the present invention can provide a lithium secondary battery comprising a solid electrolyte having the above-described advantages.

### [BRIEF DESCRIPTION OF THE DRAWINGS]

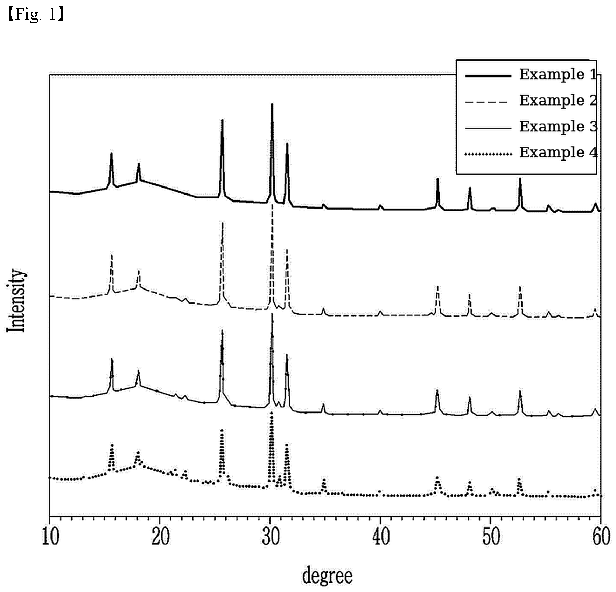

FIG. 1 shows XRD analysis results of solid electrolytes according to Examples of the present invention.

### [BEST MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

Hereinafter, a solid electrolyte according to an embodiment of the present invention will be described.

The solid electrolyte according to an embodiment comprises one or more of Li₂SO₄ and P₂O₅, and may be represented by the following Chemical Formula 1.

[Chemical Formula 1] Li₇₋₅ₐ₋ₓ₊ₐₓP_{1-a+2b}S₆₋₅ₐ₋ₓ₊ₐₓO_{4a+5b}Clₓ₋ₐₓ

wherein 1≤x≤2, 0<a≤0.2, and 0≤b≤0.1.

The a may mean the content of Li₂SO₄ included in the solid electrolyte, and the b may mean the content of P₂O₅ included in the solid electrolyte.

The solid electrolyte according to an embodiment may satisfy 1.02<IA/IB<1.11 when X-ray diffraction analysis (XRD) is performed on the solid electrolyte.

Here, IA represents an XRD peak intensity at 2θ=15.5±1.0°, and IB represents an XRD peak intensity at 2θ=18.0±1.0°.

When the peak intensity ratio IA/IB is included in the above-described range, moisture stability and initial capacity of the solid electrolyte may be improved. In contrast, when the peak intensity ratio IA/IB is outside the above-described range, there may be a problem in that moisture stability, discharge capacity, and ionic conductivity are reduced.

In the solid electrolyte according to an embodiment, the content of Li₂SO₄ may be in a range of 3 mol% to 5 mol% based on 100 mol% of the total amount of the solid electrolyte.

When the content of Li₂SO₄ is included in the above-described range, moisture stability and initial capacity of the sulfide-based solid electrolyte may be improved. In contrast, when the content of Li₂SO₄ exceeds the upper limit of the above-described range, the proportion of Li₂SO₄, which is an impurity, increases, and thus ionic conductivity and discharge capacity of the solid electrolyte may rather be reduced. In addition, when the proportion of Li₂SO₄ is high, Li₂SO₄ may be separated from the solid electrolyte structure, thereby reducing stability of the solid electrolyte. In addition, when the content of Li₂SO₄ is less than the lower limit of the above-described range, moisture stability of the solid electrolyte may be low.

In the solid electrolyte according to an embodiment, the content of P₂O₅ may be in a range of 3 mol% to 5 mol% based on 100 mol% of the total amount of the solid electrolyte.

When the content of P₂O₅ is included in the above-described range, moisture stability and initial capacity of the sulfide-based solid electrolyte may be improved. In contrast, when the content of P₂O₅ exceeds the upper limit of the above-described range, there may be a problem in that ionic conductivity and discharge capacity of the solid electrolyte are reduced. Moisture stability may also rather be reduced.

Hereinafter, a method for preparing a solid electrolyte according to another embodiment of the present invention will be described.

The method for preparing a solid electrolyte according to another embodiment may include preparing a lithium raw material, a sulfur raw material, a halogen raw material, and P₂O₅ as raw materials; mixing the raw materials; pressure-molding the mixture to form a pellet; and heat-treating the pellet, and may include forming a solid electrolyte represented by the following Chemical Formula 1.

[Chemical Formula 1] Li₇₋₅ₐ₋ₓ₊ₐₓP_{1-a+2b}S₆₋₅ₐ₋ₓ₊ₐₓO_{4a+5b}Clₓ₋ₐₓ

wherein 1≤x≤2, 0<a≤0.2, and 0≤b≤0.1.

In the method for preparing a solid electrolyte according to another embodiment, the lithium raw material may be Li₂S comprising Li₂SO₄ as an impurity.

The method for preparing a solid electrolyte according to another embodiment may include further mixing Li₂SO₄ in the step of preparing the raw materials.

In the method for preparing a solid electrolyte according to another embodiment, the additionally mixed Li₂SO₄ may be added in a range of 3 mol% to 5 mol% based on 100 mol% of the total amount of the raw materials.

When the amount of Li₂SO₄ added is included in the above-described range, moisture stability and initial capacity of the sulfide-based solid electrolyte may be improved. In contrast, when the amount of Li₂SO₄ added exceeds the upper limit of the above-described range, the proportion of Li₂SO₄, which is an impurity, increases, and thus ionic conductivity and discharge capacity of the solid electrolyte may rather be reduced. In addition, when the proportion of Li₂SO₄ is high, Li₂SO₄ may be separated from the solid electrolyte structure, thereby reducing stability of the solid electrolyte. In addition, when the amount of Li₂SO₄ added is less than the lower limit of the above-described range, moisture stability of the solid electrolyte may be low.

In the step of preparing the raw materials in the method for preparing a solid electrolyte according to another embodiment, the P₂O₅ may be added in a range of 3 mol% to 5 mol% based on 100 mol% of the total amount of the raw materials.

When the amount of P₂O₅ added is included in the above-described range, moisture stability and initial capacity of the sulfide-based solid electrolyte may be improved. In contrast, when the amount of P₂O₅ added exceeds the upper limit of the above-described range, there may be a problem in that ionic conductivity and discharge capacity of the solid electrolyte are reduced. Moisture stability may also rather be reduced.

In the method for preparing a solid electrolyte according to another embodiment, the solid electrolyte may satisfy 1.02<IA/IB<1.11 when X-ray diffraction analysis (XRD) is performed on the solid electrolyte. Here, IA represents an XRD peak intensity at 2θ=15.5±1.0°, and IB represents an XRD peak intensity at 2θ=18.0±1.0°.

When the peak intensity ratio IA/IB is included in the above-described range, moisture stability and initial capacity of the solid electrolyte may be improved. In contrast, when the peak intensity ratio IA/IB is outside the above-described range, there may be a problem in that moisture stability, discharge capacity, and ionic conductivity are reduced.

Hereinafter, a lithium secondary battery according to another embodiment of the present invention will be described.

The lithium secondary battery according to another embodiment comprises: a positive electrode comprising a positive electrode active material; a negative electrode comprising a negative electrode active material; and a solid electrolyte positioned between the positive electrode and the negative electrode, wherein the solid electrolyte comprises one or more of Li₂SO₄ and P₂O₅, and may be represented by the following Chemical Formula 1.

[Chemical Formula 1] Li₇₋₅ₐ₋ₓ₊ₐₓP_{1-a+2b}S₆₋₅ₐ₋ₓ₊ₐₓO_{4a+5b}Clₓ₋ₐₓ

wherein 1≤x≤2, 0<a≤0.2, and 0≤b≤0.1.

In the lithium secondary battery according to another embodiment, the solid electrolyte may satisfy 1.02<IA/IB<1.11 when X-ray diffraction analysis (XRD) is performed on the solid electrolyte. Here, IA represents an XRD peak intensity at 2θ=15.5±1.0°, and IB represents an XRD peak intensity at 2θ=18.0±1.0°.

When the peak intensity ratio IA/IB is included in the above-described range, moisture stability and initial capacity of the solid electrolyte may be improved. In contrast, when the peak intensity ratio IA/IB is outside the above-described range, there may be a problem in that moisture stability, discharge capacity, and ionic conductivity are reduced.

### [MODE FOR CARRYING OUT THE INVENTION]

Hereinafter, Examples, Comparative Examples, and Experimental Examples of the present invention will be described. However, the following Examples are merely preferred embodiments of the present invention, and the present invention is not limited to the following Examples. In addition, various modifications may be made and practiced within the scope of the claims, the detailed description of the invention, and the accompanying drawings, and such modifications may also fall within the scope of the present invention.

### <Comparative Example 1> Preparation of Li₆PS₅Cl (Li₂SO₄ and P₂O₅ Not Added)

The Li₆PS₅Cl was synthesized by dry milling.

After the raw materials were mixed at the corresponding stoichiometric ratio, the mixture was mixed using a planetary mill at a speed of 300 rpm for about 8 hours. Thereafter, a pressure of 300 MPa was applied to form a pellet, and the pellet was heat-treated at a temperature of 550°C under an Ar atmosphere to prepare Li₆PS₅Cl.

### <Example 1> Preparation of Li_{6.06}PS_{5.03}O_{0.12}Cl (Li₂SO₄: 3 mol%; P₂O₅: 0 mol% Introduced)

After the raw materials were mixed at the corresponding stoichiometric ratio by applying x=1, a=0.03, and b=0 in [Chemical Formula 1] Li_{7-5ₐ₋ₓ₊ₐₓ}P_{1-ₐ+2β}S_{6-5ₐ₋ₓ₊ₐₓ}O_{4ₐ+5β}Clₓ₋ₐₓ, the mixture was mixed using a planetary mill at a speed of 300 rpm for about 8 hours. Thereafter, a pressure of 300 MPa was applied to form a pellet, and the pellet was heat-treated at a temperature of 550°C under an Ar atmosphere to prepare Li_{6.06}PS_{5.03}O_{0.12}Cl.

### <Example 2> Preparation of Li_{5.88}PS_{4.88}O_{0.2}Cl_{0.97} (Li₂SO₄: 3 mol%; P₂O₅: 1.5 mol% Introduced)

After the raw materials were mixed at the corresponding stoichiometric ratio by applying x=1, a=0.03, and b=0.015 in [Chemical Formula 1] Li_{7-5ₐ₋ₓ₊ₐₓ}P_{1-ₐ+2β}S_{6-5ₐ₋ₓ₊ₐₓ}O_{4ₐ+5β}Clₓ₋ₐₓ, the mixture was mixed using a planetary mill at a speed of 300 rpm for about 8 hours. Thereafter, a pressure of 300 MPa was applied to form a pellet, and the pellet was heat-treated at a temperature of 550°C under an Ar atmosphere to prepare Li_{5.88}PS_{4.88}O_{0.2}Cl_{0.97}.

### <Example 3> Preparation of Li_{5.71}PS_{4.74}O_{0.26}Cl_{0.94} (Li₂SO₄: 3 mol%; P₂O₅: 3 mol% Introduced)

After the raw materials were mixed at the corresponding stoichiometric ratio by applying x=1, a=0.03, and b=0.03 in [Chemical Formula 1] Li_{7-5ₐ₋ₓ₊ₐₓ}P_{1-ₐ+2β}S_{6-5ₐ₋ₓ₊ₐₓ}O_{4ₐ+5β}Clₓ₋ₐₓ, the mixture was mixed using a planetary mill at a speed of 300 rpm for about 8 hours. Thereafter, a pressure of 300 MPa was applied to form a pellet, and the pellet was heat-treated at a temperature of 550°C under an Ar atmosphere to prepare Li_{5.71}PS_{4.74}O_{0.26}Cl_{0.94}.

### <Comparative Example 2> Preparation of Li_{5.39}PS_{4.48}O_{0.39}Cl_{0.89} (Li₂SO₄: 3 mol%; P₂O₅: 6 mol% Introduced)

After the raw materials were mixed at the corresponding stoichiometric ratio by applying x=1, a=0.03, and b=0.06 in [Chemical Formula 1] Li_{7-5ₐ₋ₓ₊ₐₓ}P_{1-ₐ+2β}S_{6-5ₐ₋ₓ₊ₐₓ}O_{4ₐ+5β}Clₓ₋ₐₓ, the mixture was mixed using a planetary mill at a speed of 300 rpm for about 8 hours. Thereafter, a pressure of 300 MPa was applied to form a pellet, and the pellet was heat-treated at a temperature of 550°C under an Ar atmosphere to prepare Li_{5.39}PS_{4.48}O_{0.39}Cl_{0.89}.

### <Experimental Example 1> Evaluation of 0.1C Ionic Conductivity at 30°C

Electrochemical evaluation was performed on the solid electrolytes of Comparative Examples 1 and 2 and Examples 1 to 3 using a powder-pressed cell. The electrolyte was introduced and densified at 300 MPa. Thereafter, the cell was fastened using SUS electrodes at a pressure of 70 MPa, and impedance was measured by applying 10 mV at 25°C.

### <Experimental Example 2> Evaluation of Moisture Stability

0.5 g of the solid electrolyte was applied onto a watch glass, exposed for 8 hours in a dry room having a dew point of -45°C, and then ionic conductivities before and after exposure were comparatively evaluated.

### <Experimental Example 3> Evaluation of Electrochemical Characteristics

After a pellet of the solid electrolyte was prepared, a positive electrode was bonded to the upper portion and a counter electrode In was bonded to the lower portion, followed by densification at 500 MPa. After an all-solid-state battery cell was fastened, a formation cycle was performed at 0.1C in a 30°C chamber, and lifespan characteristics were evaluated at 0.5C.

### <Experimental Example 4> X-Ray Diffraction Analysis (XRD)

FIG. 1 shows XRD analysis results of the solid electrolytes according to Examples of the present invention.

According to FIG. 1 and Table 1 below, IA/IB confirmed in Examples 1 to 3, wherein IA is an XRD peak intensity at 2θ=15.5° and IB is an XRD peak intensity at 2θ=18.0°, showed values higher than IA/IB of Comparative Example 1 and lower than IA/IB of Comparative Example 2.

That is, it can be confirmed that, when IA/IB, which is the XRD peak intensity ratio, is included in a range of greater than 1.02 and less than 1.11, discharge capacity is improved and moisture stability is also generally improved.

**[Table 1]**

| Classificatio n | Li₂SO₄ Content (mol%) | P₂O₅ Content (mol%) | Sulfide-Based Solid Electrolyte (LSPCl) Composition | Ionic Conductivity (mS/cm) | Discharge Capacity (mAh/g) | Moisture Stability (%) | XRD Peak Intensity Ratio IA/IB |
|---|---|---|---|---|---|---|---|
| Comparative Example 1 | 0 | 0 | Li₆PS₅Cl | 2.70 | 203.0 | 77 | 1.02 |
| Example 1 | 3 | 0 | Li_{6.06}PS_{5.03}O_{0.12}Cl | 2.78 | 204.6 | 80 | 1.03 |
| Example 2 | 3 | 1.5 | Li_{5.88}PS_{4.88}O_{0.2}Cl_{0.97} | 2.65 | 206.5 | 82 | 1.06 |
| Example 3 | 3 | 3 | Li_{5.71}PS_{4.74}O_{0.26}Cl_{0.94} | 2.66 | 204.8 | 76 | 1.09 |
| Comparative Example 2 | 3 | 6 | Li_{5.39}PS_{4.48}O_{0.39}Cl_{0.89} | 2.26 | 201.1 | 71 | 1.11 |

## Claims

1. A solid electrolyte, comprising:
one or more of Li₂SO₄ and P₂O₅,
wherein the solid electrolyte is represented by the following Chemical Formula 1:
[Chemical Formula 1] Li₇₋₅ₐ₋ₓ₊ₐₓP_{1-a+2b}S₆₋₅ₐ₋ₓ₊ₐₓO_{4a+5b}Clₓ₋ₐₓ
wherein 1≤x≤2, 0<a≤0.2, and 0≤b≤0.1.

2. The solid electrolyte of claim 1,
wherein, when X-ray diffraction analysis (XRD) is performed on the solid electrolyte, 1.02<IA/IB<1.11 is satisfied,
wherein IA represents an XRD peak intensity at 2θ=15.5±1.0°, and IB represents an XRD peak intensity at 2θ=18.0±1.0°.

3. The solid electrolyte of claim 1,
wherein a content of Li₂SO₄ is in a range of 3 mol% to 5 mol% based on 100 mol% of a total amount of the solid electrolyte.

4. The solid electrolyte of claim 1,
wherein a content of P₂O₅ is in a range of 3 mol% to 5 mol% based on 100 mol% of a total amount of the solid electrolyte.

5. A method for preparing a solid electrolyte, comprising:
preparing a lithium raw material, a sulfur raw material, a halogen raw material, and P₂O₅ as raw materials;
mixing the raw materials;
pressure-molding the mixture to form a pellet; and
heat-treating the pellet,
wherein a solid electrolyte represented by the following Chemical Formula 1 is formed:
[Chemical Formula 1] Li₇₋₅ₐ₋ₓ₊ₐₓP_{1-a+2b}S₆₋₅ₐ₋ₓ₊ₐₓO_{4a+5b}Clₓ₋ₐₓ
wherein 1≤x≤2, 0<a≤0.2, and 0≤b≤0.1.

6. The method for preparing a solid electrolyte of claim 5,
wherein the lithium raw material is Li₂S comprising Li₂SO₄ as an impurity.

7. The method for preparing a solid electrolyte of claim 5,
wherein the method comprises further mixing Li₂SO₄ in the step of preparing the raw materials.

8. The method for preparing a solid electrolyte of claim 7,
wherein the additionally mixed Li₂SO₄ is added in a range of 3 mol% to 5 mol% based on 100 mol% of a total amount of the raw materials.

9. The method for preparing a solid electrolyte of claim 5,
wherein, in the step of preparing the raw materials, the P₂O₅ is added in a range of 3 mol% to 5 mol% based on 100 mol% of a total amount of the raw materials.

10. The method for preparing a solid electrolyte of claim 5,
wherein, when X-ray diffraction analysis (XRD) is performed on the solid electrolyte, 1.02<IA/IB<1.11 is satisfied,
wherein IA represents an XRD peak intensity at 2θ=15.5±1.0°, and IB represents an XRD peak intensity at 2θ=18.0±1.0°.

11. A lithium secondary battery, comprising:
a positive electrode comprising a positive electrode active material;
a negative electrode comprising a negative electrode active material; and
a solid electrolyte positioned between the positive electrode and the negative electrode,
wherein the solid electrolyte comprises one or more of Li₂SO₄ and P₂O₅ and is represented by the following Chemical Formula 1:
[Chemical Formula 1] Li₇₋₅ₐ₋ₓ₊ₐₓP_{1-a+2b}S₆₋₅ₐ₋ₓ₊ₐₓO_{4a+5b}Clₓ₋ₐₓ
wherein 1≤x≤2, 0<a≤0.2, and 0≤b≤0.1.

12. The lithium secondary battery of claim 11,
wherein, when X-ray diffraction analysis (XRD) is performed on the solid electrolyte, 1.02<IA/IB<1.11 is satisfied,
wherein IA represents an XRD peak intensity at 2θ=15.5±1.0°, and IB represents an XRD peak intensity at 2θ=18.0±1.0°.
